# EUROPEAN PATENT SPECIFICATION

(11) **EP 3 400 185 B1**
(45) Date of publication and mention of the grant of the patent: **02.09.2020**
(21) Application number: 16721484.0
(22) Date of filing: 22.03.2016
(51) Int. Cl.: B65D 90/22, B65D 90/48, G01G 19/52, G01G 19/12, B60P 1/00

(54) **TRANSPORT CONTAINER**
TRANSPORTBEHÄLTER
CONTENEUR DE TRANSPORT

(43) Date of publication of application: 14.11.2018
(73) Proprietor: Twalib Mbarak Hatayan Limited, Port Louis (MU)
(72) Inventor: HATAYAN, Twalib Ali Mbarak, Mombasa County (KE)
(74) Representative: Regimbeau
(86) International application number: PCT/IB2016/051600
(87) International publication number: WO 2017/163105

(56) References cited:
- EP-A1- 2 261 613
- EP-A1- 2 821 761
- GB-A- 2 491 848
- JP-A- H10 332 465

## Description

### BACKGROUND OF THE INVENTION

The present application relates to a transport container.

Transport containers such as transport containers are used to transport goods from place to place.

Unfortunately the contents of these containers are often targeted by thieves who try to access the container and remove the goods either before they have left, while they are en route or after they have arrived at their destination but before they are legally unloaded. Document JP H10 332465 and EP 2 261 613 disclose transport containers including a plurality of side walls including a door in at least one of the side walls through which the inside of the container can be accessed to insert and remove goods from the container; a floor; a plurality of weight sensors located on top of the floor; an intermediate layer located on top of the weight sensors, wherein the intermediate layer is not connected to the side walls so that any load placed on the intermediate layer will be transferred on to at least one of the plurality of weight sensors which will sense the weight of the load and transfer the weight of the load onto at least the floor; and an upper floor placed over the intermediate layer onto which the load is placed in use and via which the weight of the load will be transferred onto the intermediate layer, wherein the upper floor is not connected to the side walls so that any load placed on the wooden floor will be transmitted to the intermediate layer.

The present invention addresses the aforementioned issue and provides an improved

### SUMMARY OF THE INVENTION

According to the present invention there is provided a transport container having the features defined in claim 1. it includes:
a plurality of side walls including a door in at least one of the side walls through which the inside of the container can be accessed to insert and remove goods from the container; and
a floor comprised of a plurality of load supporting beams each connected directly or indirectly to at least one side wall of the container, a plurality of weight sensors located on top of the load supporting beams, and an intermediate layer located on top of the weight sensors, wherein the intermediate layer is not connected to the side walls so that any load placed on the intermediate layer will be transferred on to at least one of the plurality of weight sensors which will sense the weight of the load and transfer the weight of the load onto at least one of the plurality of load supporting beams.

The transport container includes an upper floor placed over the intermediate layer onto which the load is placed in use and via which the weight of the load will be transferred onto the intermediate layer.

The upper floor will not be connected to the side walls so that any load placed on the upper floor will be transmitted to the intermediate layer.

In one example, the container has four side walls and is rectangular in shape and wherein the load supporting beams are connected across the width of the container between opposing side walls.

The intermediate layer may be formed from two side supporting elements and two end supporting elements which are connected together to form a rectangle and wherein the size of the rectangle is smaller than the inside dimensions of the transport container so that the intermediate layer can fit into the transport container without touching the sides of the transport container, the intermediate layer including a plurality of other supporting elements connected between the two side supporting elements and the two end supporting elements.

The intermediate layer may be only slight smaller than the inside dimensions of the transport container.

In one example, some of the plurality of supporting elements run along the width of the rectangle and some of the supporting elements run along the length of the rectangle thereby forming a mesh structure.

According to the invention, at least some of the side walls have at the bottom thereof a lower frame element to which a sheet material is connected to form the complete side wall, and wherein the combined height of the load supporting beams, weight sensors, intermediate layer and wooden floor is the same as or less than the height of the lower frame element.

According to an example embodiment not being part of the present invention there is provided a system for monitoring the contents of a transport container, the system including:
a plurality of weight sensors placed in the floor of the transport container to measure the weight of the contents of the transport container;
at least one volumetric sensor placed inside the transport container to measure the volume of the contents of the transport container; a memory;
a communication module; and
a processor connected to the plurality of weight sensors, the at least one volumetric sensor and to the communication module, the processor monitoring the output of the sensors and generating an alarm if either the weight or the volume of the contents in the transport container are reduced and transmitting an alarm signal via the communication module in the event of an alarm being triggered.

The memory preferably has stored therein initial measurements measured by the plurality of weight sensors and the at least one volumetric sensor and wherein the processor compares later measurements received from the plurality of weight sensors and the at least one volumetric sensor with the initial measurements to determine if an alarm must be triggered.

The communication module may be a GPRS communication module.

The system may also include a location module connected to the processor, the location module used to determine the location of the transport container.

The location module may be a GPS module.

In one example, the system further includes a door sensor connected to the processor, the door sensor used to determine when a door of a container has been opened.

### BRIEF DESCRIPTION OF THE DRAWINGS

- **Figures 1**: show a transport container with incorporated systems according to the present invention;
- **Figure 2**: shows a portion of the floor of the container illustrating how weight sensors are incorporated into the floor of the container of Figure 1;
- **Figure 3**: shows an exploded view of the layers making up the floor of the container of Figure 1; and
- **Figure 4**: shows an example block diagram of a system for monitoring the contents of the transport container.

### DESCRIPTION OF EMBODIMENTS

Referring to the accompanying Figures, a transport container and a system for monitoring the contents of a transport container are provided.

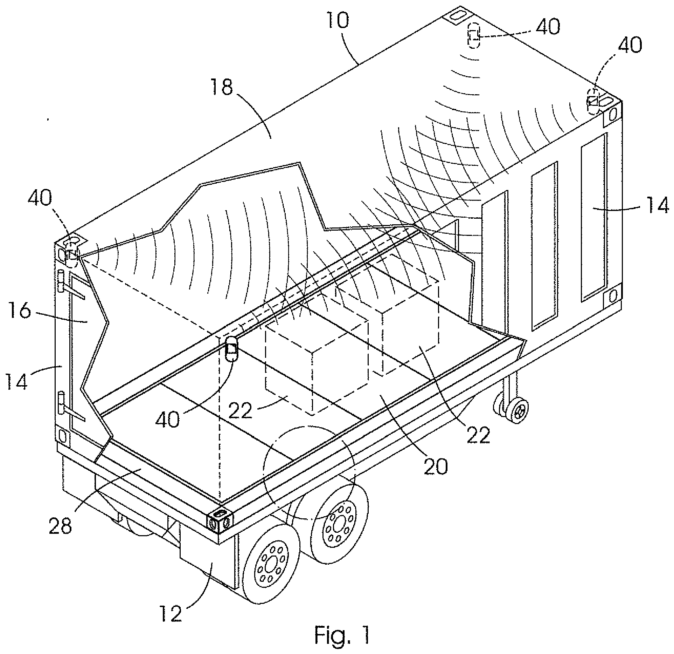

An example of a transport container 10 as shown in Figure 1 is a so-called transport container.

The transport container illustrated is located on top of a truck trailer 12 however it will be appreciated that in use the transport containers are typically moved between trucks, ships and storage where they are loaded and unloaded.

In addition, whilst it will be appreciated that the illustrated embodiment is a transport container, the present invention could be used for other types of transport containers that move goods for example to monitor the interior of a trailer of a cargo truck that is used to move goods by land or the interior of a carriage of a train that is used to move goods by rail or indeed the interior of a cargo airplane that is used to move goods by air, to name but a few examples.

Thus the term "transport container" used in this specification is to be construed broadly and is not limited to the exemplary description below.

In any event, the container 10 includes a plurality of side walls 14 - four in the illustrated embodiment.

A door 16 is included in at least one of the side walls 14 through which the inside of the container 10 can be accessed to insert and remove goods from the container.

The container may also include a roof 18 although some containers are open top for abnormal loads.

The container includes a floor 20 which will be described in more detail below as the floor is modified to allow for the weight monitoring functionality.

In use, the door 16 is opened, goods 22 that are to be transported are loaded into the container and the door 16 is then closed and typically locked.

The container 10 is transported to its destination where the container is opened and the goods 22 are accessed.

What is required is to monitor that the contents of the container, in this case the goods 22, are not removed from the container without authorisation before, during or after the transport process.

In order to facilitate this, an improved transport container 10 is provided according to the present invention which is specifically modified to allow inter-alia the monitoring of the weight of the contents of the container without monitoring the weight of the container itself.

This provides one very important monitoring aspect as if the weight of the contents is reduced compared to an initial loaded weight, it can be deduced that at least some of the goods 22 have been removed from the container.

In order to implement this, the floor 20 of the container is modified to allow for this weight to be monitored.

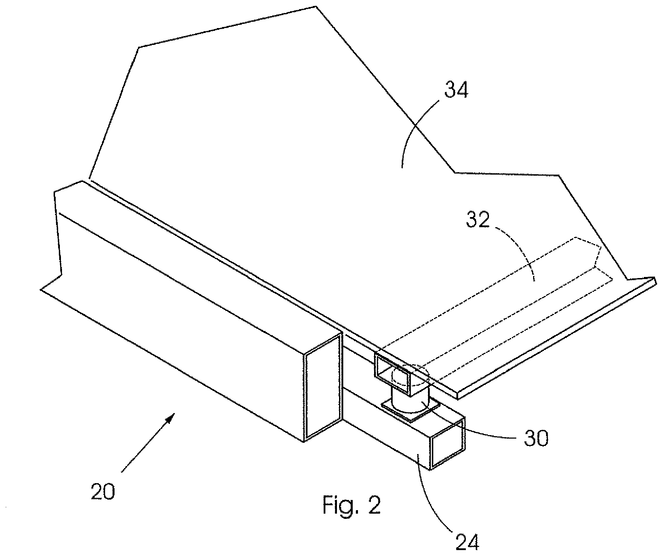

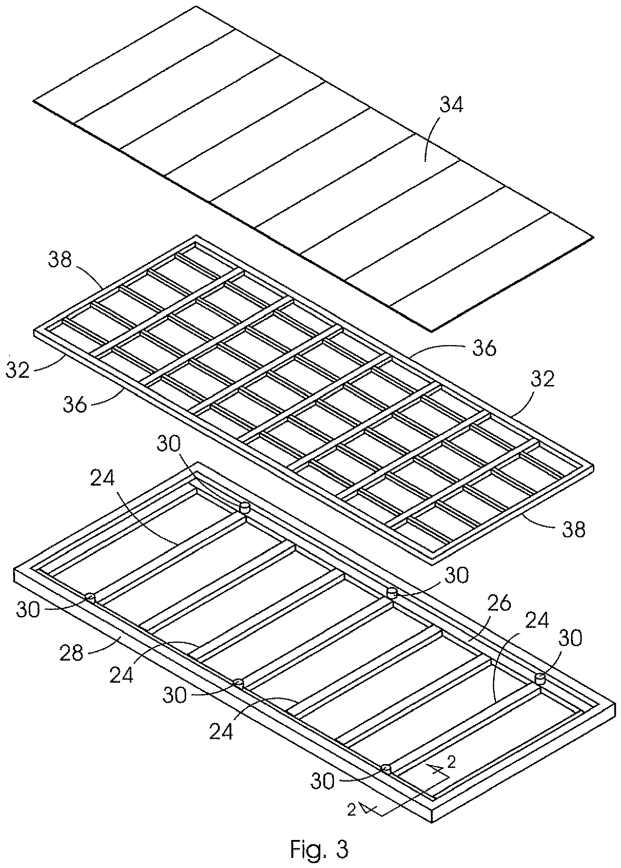

Referring to Figures 2 and 3, the figures show the floor of the transport container 10 illustrated in Figure 1 in more detail.

Figure 2 shows a cross section along line 2-2 from Figure 3.

In the present invention, the floor 20 is made up of three layers which can more clearly be seen in Figure 3.
The bottommost layer is comprised of a plurality of load supporting beams 24 each connected directly or indirectly between two side wails 14 of the container.
In the illustrated embodiment, the plurality of load supporting beams 24 are incorporated into a load supporting frame 26 which is then connected to a lower frame element 28 which forms part of the container.
Alternatively, the plurality of load supporting beams 24 can be connected directly to lower frame elements 28 making up the bottom of the container.
It will be appreciated that the illustrated transport container 10 is a typical container that has four side walls and is rectangular in shape.
In this scenario, the load supporting beams 24 are connected across the width of the container between opposing side walls.
A plurality of weight sensors 30 are located on top of the load supporting beams 24.
It will be appreciated that the number of weight sensors 30 and their location on the load supporting beams 24 can be varied to provide more or less weight measurement sensitivity, depending on the size of the container and needs of the particular application.

In one example embodiment, the weight sensors are piezo electric weight sensors but any suitable weight sensor could be used for the application.

The key criteria for the weight sensors 30 is that they are able to be loaded up to the maximum load which can be expected to be placed inside the container and that they have the sensitivity to determine when at least some of the contents of the container had been removed.

In a prototype of the present invention, low profile piezo-electric load sensors that have a capacity of 6,000 Kgs, a height of 100mm, and accuracy to 10kg were used.

An intermediate layer 32 is located on top of the weight sensors 30, wherein the intermediate layer is not connected to the side walls (14, 28) so that any load placed on the intermediate layer 32 will be transferred onto at least one of the plurality of weight sensors 30.

In the illustrated embodiment, the intermediate layer 32 is formed from two side supporting elements 36 and two end supporting elements 38 which are connected together to form a rectangle and wherein the size of the rectangle is smaller than the inside dimensions of the transport container so that the intermediate layer 32 can fit into the transport container without touching the sides of the transport container.

It is envisaged that the intermediate layer 32 will be only slightly smaller than the inside dimensions of the transport container to thereby fit snuggly into the interior of the transport container.

The intermediate layer 32 also includes a plurality of other supporting elements 38 connected between the two side supporting elements and the two end supporting elements.

The other supporting elements include a plurality of supporting elements that run along the width of the rectangle and a plurality of supporting elements that run along the length of the rectangle to thereby form a mesh structure.
Thus it will be appreciated that the intermediate layer 32 is movable with respect to the lower frame element 28 and thus with respect to the side walls 14 of the container 10.
If the intermediate layer 32 were fixed, the weight sensors 30 located underneath the intermediate layer 32 would not sense true weight changes, if any.

In the present invention, the intermediate layer 32 is low profile to maintain volumetric capacity of the container, yet structurally sound enough to bear load upon it and distribute it equitably to its points of support without failure.
In any event, it will be appreciated that in the illustrated configuration, the weight of the load will be received onto the intermediate layer 32 and transferred via at least one of the weight sensors 30 onto at least one of the plurality of load supporting beams 24.
It will also be appreciated that if the container is fully loaded, the weight of this load will be distributed across the entire intermediate layer 32, onto all of the weight sensors 30 and all of the load supporting beams 24 whereas if the container is only partially loaded, it is likely that this weight will be distributed onto a part of the intermediate layer 32 and one or more of the weight sensors 30 and load supporting beams 24.
The final and uppermost layer of the floor is a wooden floor 34 placed over the intermediate layer 32.
The wooden floor 34 is also not connected to the side walls (14, 28) so that any load placed on the wooden floor will be transmitted to the intermediate layer 32 and then onto the weight sensors 30 and the load supporting beams 24 as has been described above.

It will be appreciated that the wooden floor 32 will be the uppermost layer in the layered floor construction and will be the layer which users will see and onto which the goods 22 will be directly loaded in use.

It will also be appreciated that this wooden floor 34 need not necessarily be constructed of wood but could be constructed of any other suitable material and wood is simply described herein as one convenient material from which the layer could be formed as this is the standardize transport container floor finish. This finish helps insulate the cargo from both heat and electric current, while providing a non-slip surface.

It has already been mentioned above that the side walls 14 will include a lower frame element 28.

Standard transport containers are typically made from a steel frame to which sheet material is connected to form the side walls, roof and floor.

It is very important that the interior space of the transport container is not decreased by the present invention as the interior space determines the amount of goods that can be shipped.

In order to address this, the combined height of the load supporting beams 24, weight sensors 30, intermediate layer 32 and wooden floor 34 is substantially the same as or less than the height of the lower frame element.

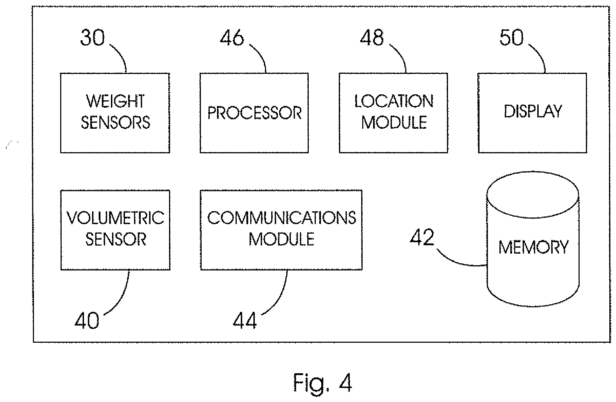

Referring now to Figure 4, the weight sensors 30 described above are incorporated into a system for monitoring the contents of the container which will be described in more detail below with reference to this figure The system for monitoring the contents of the transport container 10 includes the plurality of weight sensors 30 placed in the floor of the transport container to measure the weight of the contents of the transport container.

At least one volumetric sensor 40 is placed inside the transport container 10 to measure the volume of the contents of the transport container.

A memory 42 is used for storing system data therein.

A communication module 44 in one example includes a GPRS communication module. The communication module 44 typically allows communication with an external server which will be in communication with a large number of systems installed on a large number of containers.

For this reason, an identification number is also stored in the memory 42 to allow the container system to identify itself when communicating with the external server.

In addition, the communication module 44 also includes short range communication ability such as via Bluetooth, for example.
This allows the on-board systems to communicate to handheld devices which can be used to interface with the container system. It will be appreciated that this will allow a user to access the on-board container system, carry out actions such as instructing the processor to take an initial reading and read data from the memory 42 to name but a few examples.

The handheld device could be a mobile telephone, a tablet device or a Bluetooth enabled watch to name but a few examples.

The communication module 44 also includes a satellite communication module so that the system can communicate via satellite when other forms of communication are not available.

A processor 46 is connected to the plurality of weight sensors 30, the at least one volumetric sensor 40 and to the communication module 44 as well as to the memory 42.

In the illustrated embodiment, four volumetric sensors are shown.

One example implementation of the volumetric sensor 40 is a radio wave system including a radio wave transmitter and receiver. In this example, radio waves are transmitted from the transmitter and reflected off the interior of the container as well as the goods 22. The reflector radio waves are received at the receiver.

Based on the received radio waves, software executing on the processor46 is able to determine the estimated volume of the goods 22.

This estimated volume is then compared with the initial volume stored to determine if the volume has been in any way reduced.

The processor 46 controls the operation of the system as follows.

When the container is finished being loaded for a transport, the processor via the plurality of weight sensors 30 records a starting weight and via the volumetric sensors 40 a starting volume of the goods 22.

The values are recorded in the memory 42.

The processor 46 then periodically monitors the output of the sensors and compares these to the initial values stored in the memory 42.

The processor 46 will generate an alarm if either the weight or the volume of the contents in the transport container are reduced.

An alarm signal is then transmitted via the communication module 44 in the event of an alarm being triggered.

The system may also include a location module 48 connected to the processor 46, the location module being used to determine the location of the transport container at any time.

In one example embodiment, the location module 48 is a GPS module.

A number of other known sensors may be incorporated into the container in addition to the weight and volumetric fences described above.

For example, the system may further include one or more door sensors (not shown) connected to the processor 46.

The door sensors are used to determine when the door 16 of the container 10 has been opened.

Sensors may also be added to monitor for any changes of physical qualities of the contents. Examples of sensors that could be added to achieve this are sensors to measure temperature, humidity or for biological/chemical changes.

An example of a biological sensor is a passive infrared sensor which detects heat produced by human or animal bodies.

Examples of chemical sensors are sensors to detect the presence of ethanol and methane related gases, for example.
In addition to the above, cameras may be integrated into the system which will be used to record images of people entering and leaving the containers to which they are attached.

Many of the components listed above will be incorporated into a PC board with software executing on the processor 46 which will form part of the board.

Software executing on the processor 46 integrates and interprets information collected by the system for use by the shippers, owners and the regulating authorities.

The software currently comprises various modules to carry out a number of functions including but not limited to the following.

The software is responsible for interrogating the sensors, determining when to send information to the control server/s, processing requests from the server/s and controlling communications outside the container.

Thus the software runs the communication module 44 on the custom PCB.

In the prototype, the custom PCB had four modules running almost independently because they implement protocol stacks that are not proprietary. The stacks include GSM/GPRS/3G, GPS, Bluetooth 4.0 and Satellite telephony.

This requires special software that can communicate with the communications module 44, which further communicates as per the protocol stack(s).

The software also controls communication from the container to the control server/s. Once there is information required by the server/s, it request from the device in the container via GPRS or SMS when in-land or via Satellite messages when oversea.

The response from the system to the server is sent over HTTP using a WebApi. This same WebApi can handle communication to handheld devices and wearables.

Where the handheld device referred to above is a smart phone or tablet with Bluetooth 4.0 connectivity and internet access, an application is executed on the handheld device to allow the device to handle requesting information from the container, verification of the user on the handheld device and giving access to tracking and business functionality for owner and their agents.

The system also includes a battery (not shown) and a power supply and regulation module to manage the power for battery life longevity to prevent system failure due to power unavailability and prevent frequent maintenance.

Thus it will be appreciated that the present invention provides an improved transport container that allows the ability to weigh the contents of the container.

This is achieved without reducing the interior volume of the container.

In addition, to avoid a thief removing the contents of the container and replacing the contents with arbitrary heavy items such as rocks, the volumetric sensors work in conjunction with the weight sensors to avoid this scenario.

The volumetric sensors alone would not work as a thief could simply empty boxes stored in the container but the volume of the empty boxes would remain the same without the valuables usually stored therein.

## Claims

1. A transport container (10) including:
a plurality of side walls (14) including a door (16)
in at least one of the side
walls through which the inside of the container can be accessed to insert and remove goods (22) from the container;
a floor (20) comprised of a plurality of load supporting beams (24) each connected directly or indirectly to at least one side wall (14) of the container, a plurality of weight sensors (30) located on top of the load supporting beams, and an intermediate layer (32) located on top of the weight sensors, wherein the intermediate layer (32) is not connected to the side walls (14) so that any load placed on the intermediate layer (32) will be transferred on to at least one of the plurality of weight sensors (30) which will sense the weight of the load and transfer the weight of the load onto at least one of the plurality of load supporting beams;
and an upper floor (34) placed over the intermediate layer (32) onto which the load is placed in use, wherein the upper floor (34) is not connected to the side walls (14) so that any load placed on the upper floor (34) will be transmitted to the intermediate layer (32) via the upper floor,
wherein at least some of the side walls (14) have, at the bottom thereof,
a lower frame element (28) to which a sheet material is connected to form the complete side wall,
and wherein the combined height of the load supporting beams, weight sensors, intermediate layer and upper floor is the same as or less than the height of the lower frame element.

2. A transport container (10) according to claim 1, wherein the container has four side walls (14) and is rectangular in shape and wherein the load supporting beams (24) are connected across the width of the container between opposing side walls.

3. A transport container (10) according to any one of claims 1 or 2, wherein the intermediate layer (32) is formed from two side supporting elements (36) and two end supporting elements (38) which are connected together to form a rectangle and wherein the size of the rectangle is smaller than the inside dimensions of the transport container so that the intermediate layer (32) can fit into the transport container without touching the sides of the transport container, the intermediate layer (32) including a plurality of other supporting elements (38) connected between the two side supporting elements and the two end supporting elements.

4. A transport container (10) according to claim 3, wherein the intermediate layer (32) is only slight smaller than the inside dimensions of the transport container.

5. A transport container (10) according to any one of claims 3 or 4, wherein some of the plurality of supporting elements (38) run along the width of the rectangle and some of the supporting elements (38) run along the length of the rectangle thereby forming a mesh structure.

## Patentansprüche

1. Transportcontainer (10), der Folgendes beinhaltet:
eine Vielzahl von Seitenwänden (14), die eine Tür (16) in mindestens einer der Seitenwände beinhalten, durch die der Innenraum des Containers zugänglich ist, um Waren (22) in den Behälter zu bringen und aus demselben zu entfernen;
einen Boden (20), der eine Vielzahl von laststützenden Trägern (24) umfasst, von denen jeder direkt oder indirekt mit mindestens einer Seitenwand (14) des Containers verbunden ist, wobei sich eine Vielzahl von Gewichtssensoren (30) auf den laststützenden Trägern befinden und wobei sich eine Zwischenebene (32) auf den Gewichtssensoren befindet, wobei die Zwischenebene (32) nicht mit den Seitenwänden (14) verbunden ist, derart, dass eine Last, die auf der Zwischenebene (32) platziert wird, auf mindestens einen der Vielzahl von Gewichtssensoren (30) verschoben wird, der das Gewicht der Last erfasst und das Gewicht der Last auf mindestens einen der Vielzahl von laststützenden Trägern verschiebt;
und einen oberen Boden (34), der über der Zwischenebene (32) platziert ist, auf der die Last im Gebrauch platziert wird, wobei der obere Boden (34) nicht mit den Seitenwänden (14) verbunden ist, derart, dass eine Last die auf dem oberen Boden (34) platziert wird, via den oberen Boden zur Zwischenebene (32) übertragen wird,
wobei mindestens einige der Seitenwände (14) an der Unterseite davon ein unteres Rahmenelement (28) aufweisen, mit dem ein Plattenmaterial verbunden ist, um die vollständige Seitenwand zu bilden,
und wobei die kombinierte Höhe der laststützenden Träger, der Gewichtssensoren, der Zwischenebene und des oberen Bodens dieselbe ist oder kleiner als die Höhe des unteren Rahmenelements.

2. Transportcontainer (10) nach Anspruch 1, wobei der Container vier Seitenwände (14) aufweist und von rechteckiger Form ist und wobei die laststützenden Träger (24) über die Breite des Containers zwischen gegenüberliegenden Seitenwänden verbunden sind.

3. Transportcontainer (10) nach einem der Ansprüche 1 oder 2, wobei die Zwischenebene (32) aus zwei stützenden Seitenelementen (36) und zwei stützenden Endelementen (38) gebildet ist, die miteinander verbunden sind, um ein Rechteck zu bilden, und wobei die Größe des Rechtecks kleiner ist als die Innenabmessungen des Transportcontainers, derart, dass die Zwischenebene (32) in den Transportcontainer passt, ohne die Seiten des Transportcontainers zu berühren, wobei die Zwischenebene (32) eine Vielzahl von anderen Stützelementen (38) beinhaltet, die zwischen den beiden stützenden Seitenelementen und den beiden stützenden Endelementen verbunden sind.

4. Transportcontainer (10) nach Anspruch 3, wobei die Zwischenebene (32) nur geringfügig kleiner ist als die Innenabmessungen des Transportcontainers.

5. Transportcontainer (10) nach einem der Ansprüche 3 oder 4, wobei einige der Vielzahl von Stützelementen (38) entlang der Breite des Rechtecks verlaufen und einigen der Stützelemente (38) entlang der Länge des Rechtecks verlaufen und dadurch eine Gitterstruktur bilden.

## Revendications

1. Conteneur de transport (10) comprenant :
une pluralité de parois latérales (14) comprenant une porte (16) dans au moins l'une des parois latérales d'accès à l'intérieur du conteneur pour insérer et retirer des marchandises (22) du conteneur ;
un plancher (20) composé d'une pluralité de poutres de support de charge (24), chacune étant raccordée directement ou indirectement à au moins une paroi latérale (14) du conteneur, une pluralité de capteurs de poids (30) positionnés sur le dessus des poutres de support de charge, et une couche intermédiaire (32) positionnée sur le dessus des capteurs de poids,
dans lequel la couche intermédiaire (32) n'est pas raccordée aux parois latérales (14), de sorte que n'importe quelle charge placée sur la couche intermédiaire (32) est transférée sur au moins l'un de la pluralité de capteurs de poids (30) qui détecte le poids de la charge et transfère le poids de la charge sur au moins l'une de la pluralité de poutres de support de charge ;
et un plancher supérieur (34) placé sur la couche intermédiaire (32) sur lequel la charge est placée à l'usage, dans lequel le plancher supérieur (34) n'est pas raccordé aux parois latérales (14) de sorte que n'importe quelle charge placée sur le plancher supérieur (34) est transmise à la couche intermédiaire (32) via le plancher supérieur,
dans lequel au moins certaines des parois latérales (14) ont, au niveau de leur fond, un élément de bâti inférieur (28) auquel un matériau de feuille est raccordé afin de former la paroi latérale complète,
et dans lequel la hauteur combinée des poutres de support de charge, des capteurs de poids, de la couche intermédiaire et du plancher supérieur est inférieure ou égale à la hauteur de l'élément de bâti inférieur.

2. Conteneur de transport (10) selon la revendication 1, dans lequel le conteneur a quatre parois latérales (14) et est de forme rectangulaire, et dans lequel les poutres de support de charge (24) sont raccordées de part et d'autre de la largeur du conteneur entre les parois latérales opposées.

3. Conteneur de transport (10) selon l'une quelconque des revendications 1 ou 2, dans lequel la couche intermédiaire (32) est formée à partir de deux éléments de support latéraux (36) et de deux éléments de support d'extrémité (38) qui sont raccordés ensemble afin de former un rectangle, et dans lequel la taille du rectangle est inférieure aux dimensions intérieures du conteneur de transport de sorte que la couche intermédiaire (32) peut s'adapter dans le conteneur de transport sans toucher les côtés du conteneur de transport, la couche intermédiaire (32) comprenant une pluralité d'autres éléments de support (38) raccordés entre les deux éléments de support latéraux et les deux éléments de support d'extrémité.

4. Conteneur de transport (10) selon la revendication 3, dans lequel la couche intermédiaire (32) n'est que légèrement plus petite que les dimensions intérieures du conteneur de transport.

5. Conteneur de transport (10) selon l'une quelconque des revendications 3 ou 4, dans lequel certains de la pluralité d'éléments de support (38) s'étendent le long de la largeur du rectangle et certains des éléments de support (38) s'étendent le long de la longueur du rectangle, formant ainsi une structure en treillis.
